# EUROPÄISCHE PATENTANMELDUNG

(11) **EP 4 474 296 A1**
(43) Veröffentlichungstag der Anmeldung: **11.12.2024**
(21) Anmeldenummer: 23178420.8
(22) Anmeldetag: 09.06.2023
(51) Int. Cl.: B65B 9/20, A22C 11/10, B65B 9/24

(54) **VORRICHTUNG UND VERFAHREN ZUM HERSTELLEN VON MIT FLÜSSIGEM ODER PASTÖSEM FÜLLGUT GEFÜLLTEN SACHETS**

(71) Anmelder: Albert Handtmann Maschinenfabrik GmbH & Co. KG, 88400 Biberach (DE)
(72) Erfinder: Schließer, Markus, 88489 Wain (DE); Baechtle, Manfred, 88433 Schemmerhofen (DE)
(74) Vertreter: Grünecker Patent- und Rechtsanwälte PartG mbB

(57) **Zusammenfassung**

Die Erfindung betrifft eine Vorrichtung (1) und ein Verfahren zum Herstellen von mit flüssigem oder pastösem Füllgut insbesondere Lebensmitteln (14) gefüllten Sachets (2). Die Vorrichtung weist eine Koextrusionseinrichtung (3) auf zum Koextrudieren eines Strangs (10) aus einem mit dem Füllgut (14) gefüllten Hüllenmaterial (15) und gegenüberliegende umlaufende Abteilstempel (6a, 6b), zwischen denen der Strang (10) transportiert werden kann und die das Füllgut(14), wenn sie sich auf ihrer Umlaufbahn (U) aufeinander zu bewegen, an einer Abteilstelle (8) aus dem Hüllenmaterial (15) ausstreifen und das Hüllenmaterial (15) an der Abteilstelle (8) flächig zu einem Sachet (2) verpressen können.

## Beschreibung

Die Erfindung betrifft eine Vorrichtung und ein Verfahren zum Herstellen von mit flüssigem Füllgut, insbesondere Lebensmitteln gefüllten Sachets gemäß den Oberbegriffen der Ansprüche 1 und 14.

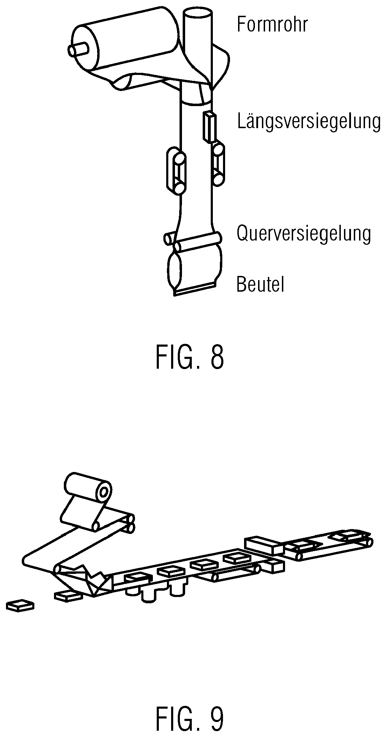

Aus dem Stand der Technik ist es bereits bekannt, ein Füllgut, z.B. Kosmetika, Lebensmittel etc. in sogenannten Sachets zu verpacken. Bei Sachets handelt es sich um Verpackungen, welche an ihren Enden flachgedrückte Endbereiche aufweisen. Hergestellt werden solche Verpackungen meist mit Schlauchbeutelmaschinen. Figur 8 zeigt beispielsweise die Funktionsweise einer solchen vertikalen Schlauchbeutelmaschine. Hierzu wird eine Packstoffhülle erzeugt, um ein Formrohr gewunden und mittels Längssiegelnaht verschlossen. Der so erzeugte Schlauch wird über das Formrohr mit dem zu verpackenden Produkt, z.B. Ketchup, gefüllt und mittels Verschlussstempel an einer Quersiegelnaht verschlossen. Die Verschlussstempel müssen beim Abfüllvorgang dabei in der Regel für eine gewisse Zeit geschlossen bleiben, was die Produktionsleistung herabsetzt. Andererseits ist eine ausreichende Siegelzeit notwendig, um eine ausreichende Festigkeit der Siegelstelle zu erzeugen. Oft verklebt auch die Hülle beim Versiegeln. Insgesamt ist das zuvor beschriebene Verfahren aufwendig und nur bedingt geeignet bei der Verwendung von biologisch abbaubaren Hüllenmaterialien (koextrudierten Hüllen), wie beispielsweise Alginathüllen, Pektinhüllen oder Collagenhüllen.

Figur 9 zeigt schematisch eine horizontale Schlauchbeutelmaschine, die ähnliche Probleme wie die in Zusammenhang mit Figur 8 gezeigte vertikale Schlauchbeutelmaschine aufweist. Insbesondere kann mit der horizontalen Schlauchbeutelmaschine keine Flüssigkeit verpackt werden.

Hiervon ausgehend liegt der vorliegenden Erfindung die Aufgabe zugrunde, eine Vorrichtung und ein Verfahren zum vereinfachten und effizienteren sowie umweltfreundlichen Herstellen von dichten, mit flüssigem oder pastösem Füllgut, insbesondere mit flüssigen oder pastösen Lebensmitteln gefüllten Sachets bereitzustellen, die eine flüssigkeitsdichte Verpackung erlauben.

Erfindungsgemäß wird diese Aufgabe durch die Merkmale der Ansprüche 1 und 14 gelöst.

Gemäß der Erfindung umfasst die Vorrichtung zum Herstellen von mit flüssigen oder pastösen Füllgut, insbesondere Lebensmitteln gefüllten Sachets eine Koextrusionseinrichtung zum Koextrudieren eines Strangs aus einem mit dem Füllgut gefüllten Hüllenmaterial. Eine solche Koextrusionseinrichtung extrudiert das Füllgut bzw. das Lebensmittel und das Hüllenmaterial gleichzeitig. Eine solche Koextrusionseinrichtung ist insbesondere auch dazu geeignet, als Hüllenmaterial ein mittels Fixierlösung aushärtbares Hüllenmaterial, insbesondere Gel zu extrudieren, vorzugsweise ein biologisch abbaubares Hüllenmaterial, wie z.B. ein Alginatgel, Pektin- oder ein Collagengel. Ein Alginatgel ist für Lebensmittel besonders vorteilhaft. Als Fixierlösung, dient z.B. eine Kalziumchlorid-Lösung.

Weiter weist die Vorrichtung gegenüberliegende umlaufende Abteilstempel auf, zwischen denen der von der Koextrusionseinrichtung erzeugte Strang transportiert werden kann. Die Abteilstempel können das Füllgut, insbesondere das Lebensmittel, wenn sie sich auf ihrer Umlaufbahn aufeinander zubewegen und in den Strang eingreifen, an einer Abteilstelle aus dem Hüllenmaterial ausstreifen und das Hüllenmaterial, das an dieser Stelle noch nicht vollständig ausgehärtet ist, an der Abteilstelle flächig zu einem Sachet verpressen.

Da die gegenüberliegenden Abteilstempel umlaufen, sind sie im vorderen Umlenkbereich (der der Koextrusionseinrichtung zugewandt ist) nicht parallel zueinander ausgerichtet. So streifen sie, wenn sie sich im Umlenkbereich aufeinander zubewegen - bis sie wieder im Wesentlichen parallel zueinander ausgerichtet sind- die Innenmasse, d.h. das Füllgut aus, so dass sich keine Innenmasse, sondern nur eine saubere Hülle in der Abteilstelle befindet. Die Abteilstelle kann so sauber verpresst und flüssigkeitsdicht verschlossen werden. Bei einem aushärtbaren Hüllenmaterial ist dabei in der Abteilstelle das Hüllenmaterial nicht vollständig ausgehärtet, d.h. nicht vollständig vernetzt, sodass sich das aushärtbare Hüllenmaterial auf der Ober- und Unterseite der Hülle innen in der Abteilstelle stoffschlüssig insbesondere auch homogen verbinden kann. Dies ist möglich, da die Abteilstempel in den koextrudierten Strang eingreifen und nicht, wie im Stand der Technik beschrieben, der Packstoff, d.h. die Folie vorab erzeugt wird.

Die erfindungsgemäße Vorrichtung erlaubt also das flüssigkeitsdichte Verpacken von Füllgut aufgrund der vollflächig verpressten glatten und faltenfreien Abteilstelle.

Unter Flüssigkeit versteht man hier z.B. ein Füllgut mit einer Viskosität von z.B.<= 70. 000mPas bei 20 °C also z.B. auch Füllgut, das eine Konsistenz hat wie z.B. Ketchup oder Senf, Suppe, Shampoo, Creme, Honig, Konfitüre, etc., insbesondere z.B. < 5000 mPas bei 20°C (z.B. auch Apfelmus, Babynahrung, Salatdressing) und weiter, insbesondere z.B. <= 1000 mPas bei 20°C (z.B. auch Saft, Öl). Die Vorrichtung ist also aber ebenso dazu geeignet, mit pastösem Füllgut gefüllte Sachets zu erzeugen mit höheren Viskositäten

Obwohl die Abteilstempel auch umlaufend an einer Welle angeordnet sein könnten, ist es besonders vorteilhaft, wenn die Vorrichtung eine Transporteinrichtung mit gegenüberliegenden, umlaufenden Transportmitteln, insbesondere Transportbändern oder - ketten aufweist, an denen jeweils die beabstandeten Abteilstempel angeordnet sind. Es sind dabei pro Transportmittel z.B. etwa 1 - 100 Abteilstempel angeordnet. Dabei können die gegenüberliegenden Abteilstempel im Umlenkbereich der Transportmittel, insbesondere der Transportbänder derart aufeinander zu bewegt werden, dass deren ebene Pressflächen zunächst unter einem Winkel zueinander ausgerichtet sind, wenn sie in den Strang eingreifen. Bei weiterer Bewegung aus dem Umlenkbereich kommen dann die Abteilstempel parallel zueinander zu liegen, derart, dass die Abteilstelle flächig verpresst werden kann. Bei dem Übergang vom Umlenkbereich zu einem Bereich, in dem die Pressflächen der Abteilstempel parallel zueinander ausgerichtet sind, wird dabei das Füllgut, insbesondere Lebensmittel aus dem Hüllenmaterial, wie zuvor auch beschrieben, ausgestreift. Es ist dann insbesondere vorteilhaft, dass beim Transport der so erzeugten Sachets in Transportrichtung die Abteilstempel die Abteilstellen weiter verpressen können, zumindest auf einem ersten Abschnitt der Transporteinrichtung. Somit können die Abteilstellen während des Transports in der Transporteinrichtung weiter aushärten und verlassen die Vorrichtung in einem stabilen Zustand.

Es ist vorteilhaft, dass die Produktion der Sachets mit einer höheren Leistung als im Stand der Technik erfolgen kann, da mehrere Abteilelemente gleichzeitig im Eingriff sind und somit der Verfestigungsprozess nicht abhängig ist vom Portionstakt.

Es ist vorteilhaft, wenn die Abteilstempel jeweils eine ebene Pressfläche aufweisen. Die ebene Pressfläche weist keine Vorsprünge oder Vertiefungen auf, sondern ist glatt. Sie liegt beim Verpressen vollflächig auf dem Hüllenmaterial auf. Somit kann eine besonders faltenfreie Abteilstelle erzeugt werden, so dass bei einem mit flüssigem bzw. niederviskosem Füllgut, insbesondere Lebensmitteln befüllten Sachet keine Flüssigkeit an der Abteilstelle austreten kann. Das Hüllenmaterial kann somit an der Abteilstelle vollflächig verpresst werden.

Gemäß einer bevorzugten Ausführungsform weist die Pressfläche der Abteilstempel eine Länge auf, die sich senkrecht zur Transportrichtung T der Transporteinrichtung erstreckt und die größer ist im Vergleich zur Breite des ausgestoßenen Strangs ist (d.h. größer als der Durchmesser der Extrusionsdüse des Hüllenmaterials). Somit kann sichergestellt werden, dass es zu einer flüssigkeitsdichten Abteilstelle kommt und z.B. im wesentlichen rechteckförmige Sachets erzeugt werden und gleichzeitig sichergestellt werden, dass die Abteilstempel das Füllgut bzw. Lebensmittel über die gesamte Breite des Sachets an der Abteilstelle ausstreifen.

Gemäß einem bevorzugten Ausführungsbeispiel weist die Koextrusionseinrichtung ein Füllrohr zum Ausstoßen des Füllguts bzw. Lebensmittels auf, sowie eine dem Füllrohr zugeordnete Extrusionsdüse mit einem im Wesentlichen ringförmigen Extrusionsspalt zum Ausstoßen des Hüllenmaterials. Vorzugsweise steht das Füllrohr über eine Strecke X so über den Extrusionsspalt vor, dass das Hüllenmaterial durch den Extrusionsspalt auf das Füllrohr extrudiert werden kann und sich entlang dem Füllrohr zumindest teilweise verfestigen kann, d.h., wenn z.B. eine Fixierlösung auf das Füllrohr aufgebracht wird. Eine Ausführung, bei der das Füllrohr über die Extrusionsdüse für das Hüllenmaterial vorsteht, ist besonders vorteilhaft, da man dann den Abstand zwischen Füllrohr und Transporteinrichtung minimieren kann. Dies hat den Vorteil, dass das extrudierte Material nicht nach unten durchhängt und dass das Abteilen des Strangs zum frühestmöglichen Zeitpunkt erfolgt.

Die Vorrichtung kann gemäß einer bevorzugten Ausführungsform eine Gleitmitteleinrichtung zum Zuführen eines Gleitmittels (z.B. Wasser oder ein Fixiermittel) zwischen Füllrohr und ausgestoßenem Hüllenmaterial aufweisen. Es hat sich gezeigt, dass für die Herstellung der Sachets eine solche Ausgestaltung besonders geeignet ist, da die Hülle dann schonend auf das Füllrohr produziert werden und von diesem abgezogen werden kann. Es wird vorzugsweise noch vor der Transporteinrichtung ein Fixiermittel von außen auf die extrudierte Hülle aufgebracht.

Gemäß einem bevorzugten Ausführungsbeispiel ist die Breite b der Auslassöffnung des Füllrohrs größer als ihre Höhe h₂, wobei die Auslassöffnung insbesondere einen ovalen Querschnitt oder einen rechteckigen Querschnitt mit abgerundeten Ecken aufweist. Dies bringt den Vorteil mit sich, dass das Produkt, insbesondere Lebensmittelprodukt bereits flach extrudiert werden kann und somit das Füllgut einfacher durch die Abteilstempel verdrängt und die Hülle besser verpresst werden kann. Ein weiterer Vorteil ist, dass beim Zusammenführen des oberen Hüllenmaterials mit dem unteren Hüllenmaterial beim Verpressen keine Falten erzeugt werden, welche beim Verfestigungsvorgang evtl. zu schwächeren Verbindungen führen könnten und somit zu Undichtigkeiten nach dem Trennvorgang der Sachets voneinander.

Es ist aber auch vorteilhafterweise möglich, dass an dem der Transporteinrichtung zugewandten Ende des Füllrohrs ein Rohrabschnitt angeformt ist, dessen Breite der Auslassöffnung größer ist als der Durchmesser h1 des Füllrohrs und dessen Höhe h2 kleiner ist als der Durchmesser h1 des Füllrohrs. D.h., dass, wie zuvor beschrieben, die Auslassöffnung insbesondere einen ovalen Querschnitt oder einen rechteckigen Querschnitt mit abgerundeten Ecken aufweisen kann, wobei allerdings Standard-Koextrusionseinrichtungen verwendet werden können, bei denen ein zusätzlicher Rohrabschnitt an das bereits vorhandene Füllrohr angeformt bzw. angebracht wird. Vorzugsweise ist die Querschnittsfläche des Füllrohrs und des angeformten Rohrabschnitts im Wesentlichen gleich, sodass ein gleichförmiger Volumenstrom aufrechterhalten werden kann.

Gemäß einem weiteren Ausführungsbeispiel können die Transportmittel übereinander angeordnet sein und das untere umlaufende Transportmittel kann länger ausgebildet sein als das darüber liegende (länger in Transportrichtung betrachtet). Dann können nämlich die hergestellten Sachets noch weiter auf dem Transportmittel liegend transportiert werden und sich weiter verfestigen. Alternativ dazu können die Sachets an ein weiteres unteres Transportmittel abgegeben werden. In beiden Ausführungsformen können die Sachets beispielsweise auch getrennt werden.

Eine Einrichtung zum Aufbringen eines Fixiermittels ist vorzugsweise in Transportrichtung betrachtet vor den umlaufenden Transportmitteln angeordnet, d.h. also zwischen der Extrusionsdüse für das Hüllenmaterial und der Transporteinrichtung. Das Fixiermittel macht die Hülle bereits ausreichend fest, so dass die Stempel das Hüllenmaterial beim Verpressen nicht zerstören. Das Hüllenmaterial ist aber trotzdem noch nicht vollständig vernetzt, bzw. durchgeliert, sodass eine perfekt stoffschlüssige Verbindung zwischen dem oberen und unteren Hüllenmaterial beim Verpressen gewährleistet werden kann.

Gemäß einer bevorzugten Ausführungsform weist die Vorrichtung eine Trennvorrichtung auf, die aufeinanderfolgende Sachets im Bereich der Abteilstelle voneinander trennt. Eine solche Trenneinrichtung kann beispielsweise in oder nach der Transporteinrichtung angeordnet sein oder vorzugsweise kann die Trenneinrichtung auch in die Abteilstempel integriert sein. Hierbei kann eine scharfe Klinge fest in die Abteilstempel integriert sein. Alternativ können bewegliche scharfe Klingen mittig in die Abteilstempel integriert sein, wobei dieses z. B. mittels einer Kulisse zum Abtrennen der Portionen bewegt werden.

Die Trennvorrichtung kann auch dergestalt ausgebildet sein, dass die Abteilstellen nicht vollständig durchtrennt, sondern nur perforiert werden, z.B. über eine Perforiereinrichtung.

Der Abstand zwischen den gegenüberliegenden Abteilstempeln ist vorzugsweise einstellbar, insbesondere der Abstand zwischen den gegenüberliegenden Transportmitteln, so dass sich dann auch der Abstand zwischen den Abteilstempeln entsprechend ändert. Somit können der Abstand und der Anpressdruck exakt an das jeweils herzustellende Produkt angepasst werden. Dies ist aufgrund des empfindlichen Hüllenmaterials und zur Sicherstellung einer ordnungsgemäßen Abteilstelle vorteilhaft.

Vorteilhafterweise überlagert sich das Füllrohr der Koextrusionseinrichtung räumlich mit der Transporteinrichtung, d.h. es gibt in Transportrichtung betrachtet keinen Abstand zwischen dem Füllrohrende und dem der Koextrusionseinrichtung zugewandten Ende der Transporteinrichtung. Somit ist eine unmittelbare Nähe gewährleistet, so dass der extrudierte Strang nicht durchhängt und abreißt und das Hüllenmaterial auch noch nicht vollständig ausgehärtet ist.

Vorzugsweise ist dabei die Auslassöffnung des Füllrohrs in einem Umlenkbereich zwischen den Transportmitteln angeordnet, insbesondere in einem Bereich in Transportrichtung betrachtet hinter einer Ebene senkrecht zur Transportrichtung T, auf der zumindest einer der vorderen Umlenkpunkte P der Transportbänder liegt, wobei das Füllrohr so weit in Transportrichtung vorragen kann, dass die Stempel an dem Füllrohr vorbeilaufen können. Unter Umlenkpunkt versteht man den vordersten Punkt des Transportmittels, an dem das Transportmittel seine Bewegungsrichtung ändert.

Gemäß einem bevorzugten Ausführungsbeispiel ist der Abstand zwischen den gegenüberliegenden umlaufenden Transportmitteln am in Transportrichtung betrachteten hinteren Ende kleiner als am Anfang. Somit kann während des Transports mittels Transportmittel die Abteilstelle noch stärker verpresst werden.

Gemäß dem erfindungsgemäßen Verfahren zum Herstellen von mit flüssigen oder pastösen Füllgut, insbesondere Lebensmitteln gefüllten Sachets wird ein Strang aus einem mit Füllgut, insbesondere Lebensmittel gefüllten aushärtbaren Hüllenmaterial über eine Koextrusionseinrichtung extrudiert. Der Strang wird zwischen umlaufende Abteilstempel geführt, wobei die umlaufenden Abteilstempel sich aufeinander zu bewegen, in den Strang eingreifen und das Füllgut, insbesondere Lebensmittel an einer Abteilstelle aus dem Hüllenmaterial ausstreifen und das noch nicht vollständig ausgehärtete Hüllenmaterial an der Abteilstelle flächig zu einem Sachet verpressen. Dabei kann das aushärtbare Hüllenmaterial ein Gel, insbesondere ein biologisch abbaubares Gel, vorzugsweise ein Alginatgel, Pektingel oder Collagengel sein.

Mit dem erfindungsgemäßen Verfahren können auf verbesserte Art und Weise Sachets mit einer faltenfreien, glatten und somit dichten Abteilstelle hergestellt werden derart, dass auch Flüssigkeiten abgepackt werden können.

Gemäß einer bevorzugten Ausführungsform transportiert eine Transporteinrichtung mit gegenüberliegenden, umlaufenden Transportmitteln, insbesondere Transportbändern oder Ketten, an denen jeweils mehrere beabstandete Abteilstempel angeordnet sind, die abgeteilten Sachets in Transportrichtung T, wobei die Abteilstellen weiter von den Abteilstempeln gepresst werden.

Die produzierten, getrennten Sachets weisen eine rechteckige, ggfs. quadratische flache Form auf, d.h. die Höhe der Sachets ist kleiner als die Breite; vorzugsweise liegt das Verhältnis von der Höhe zur Breite in einem Bereich von 1:1,5 - 1:20. Die Abteilstellen, die die Sachets vorne und hinten begrenzen, sind flach und erstrecken sich über die gesamte Breite des Sachets.

Das Hüllenmaterial kann Lebensmittelstückchen, z.B. Paprikastückchen oder Gewürze aufweisen. Dies führt zu einem besonders ansprechenden Aussehen und einem besonderen Geschmack, z.B. Frischkäse ummantelt mit Paprikastückchen.

Vorteilhafterweise ist der Abstand von der Auslassöffnung des Füllrohrs zu einer Ebene E1, die senkrecht zur Transportrichtung T liegt und auf der zumindest eine der vorderen Achsen um die die Transportmittel umlaufen etwa 5 - 30 mm.

Die vorliegende Erfindung wird nachfolgend unter Bezugnahme der folgenden Figuren näher erläutert.
- Figur 1: zeigt in perspektivischer Darstellung eine Ausführungsform gemäß der vorliegenden Erfindung.
- Figur 2: zeigt grob schematisch einen Ausschnitt durch das in Figur 1 perspektivisch dargestellte Ausführungsbeispiel.
- Figur 3: zeigt schematisch eine Seitenansicht sowie eine Draufsicht auf den Füllrohr-Auslass auf drei unterschiedliche Füllrohre gemäß der vorliegenden Erfindung.
- Figur 4: zeigt schematisch die hergestellten Sachets in einer Kette und getrennte Sachets.
- Figur 5a: zeigt schematisch eine Aufsicht auf ein Transportmittel gemäß einem Ausführungsbeispiel der vorliegenden Erfindung.
- Figur 5b: zeigt schematisch in perspektivischer Darstellung einen Abteilstempel.
- Figur 6: zeigt einen Querschnitt durch eine Koextrusionseinrichtung gemäß der vorliegenden Erfindung.
- Figur 7: zeigt ein weiteres Ausführungsbeispiel mit verlängertem unterem Transportmittel und integrierter Trenneinheit.
- Figuren 8 und 9: zeigen Schlauchbeutelmaschinen gemäß dem Stand der Technik.

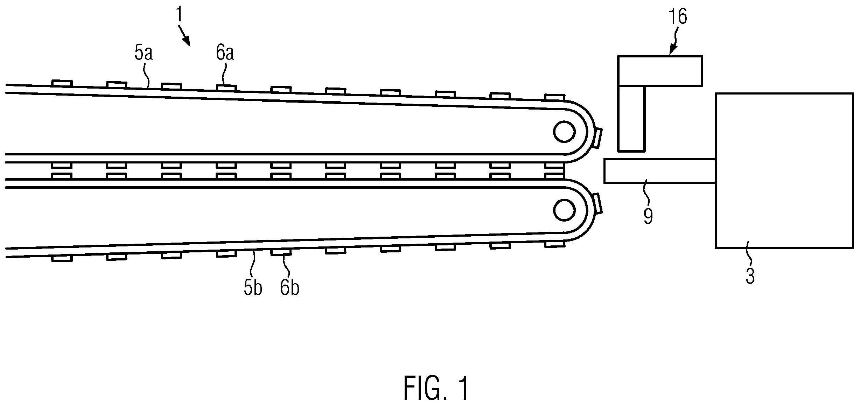

Figur 1 zeigt grob schematisch ein Ausführungsbeispiel einer Vorrichtung 1 zum Herstellen von mit flüssigen oder pastösen Füllgut bzw. Lebensmitteln gefüllten Sachets 2. Die nachfolgenden Ausführungsbeispiele werden anhand eines abzufüllenden Lebensmittels näher erläutert sind aber genauso für andere Füllgüter, d.h. Nichtlebensmittel geeignet.

Die Vorrichtung weist dabei eine Koextrusionseinrichtung 3 zum Koextrudieren eines Strangs aus mit einem Lebensmittel 14 gefüllten Hüllenmaterial 15 auf. Als flüssiges Lebensmittel kann beispielsweise Ketchup, Senf, Marmelade, Honig abgefüllt werden. Als flüssiges Füllgut kommen z.B. auch Nichtlebensmittel in Frage wie z.B. Shampoo, Creme, Flüssigwaschmittel etc. Aber auch Füllgut, bzw. Lebensmittel mit einer höheren Viskosität kann dicht mit der erfindungsgemäßen Vorrichtung verpackt werden- auch hier ist die flüssigkeitsdichte Verpackung vorteilhaft, damit das Produkt nicht austrocknet.

Als aushärtbares Hüllenmaterial eignet sich insbesondere Alginatgel, alternativ Pektingel oder. Collagengel. Solche Materialien sind insbesondere deshalb vorteilhaft, weil sie biologisch abbaubar und auch verzehrbar sind und die Menge an Plastikabfall reduziert werden kann. Solche Materialen sind z.B. als Paste kommerziell erhältlich oder als Pulver, das mit Wasser angerührt wird.

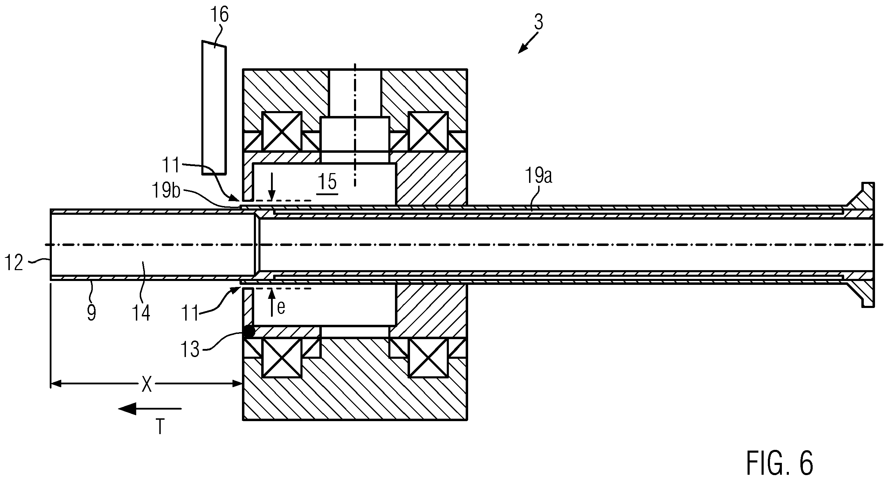

Figur 6 zeigt eine mögliche Ausführungsform einer solchen Koextrusionseinrichtung 3. Die Koextrusionseinrichtung 3 weist ein Füllrohr 9 auf zum Ausstoßen des Lebensmittels 14 sowie eine dem Füllrohr 9 zugeordnete Extrusionsdüse 13 mit einem vorzugsweise ringförmigen Extrusionsspalt 11 zum Ausstoßen des Hüllenmaterials 15. Wenn hier auch nicht dargestellt, so gibt es Koextrusionseinrichtungen, die direkt auf die Außenfläche des Lebensmittels 14 das Hüllenmaterial 15 ausstoßen. Bei flüssigen oder niederviskosen Materialien ist dies allerdings schwierig. So wird, wie in Figur 6 dargestellt, ein Füllrohr verwendet, das über die Strecke X so über den Extrusionsspalt 11 vorsteht, dass das Hüllenmaterial 15 durch den Extrusionsspalt 11 auf das Füllrohr 9 extrudiert wird und sich so entlang dem Füllrohr 9 verfestigen kann und dann zusammen mit dem extrudierten Lebensmittel 14 von dem Füllrohr 9 abgezogen werden kann. Damit sich das extrudierte Hüllenmaterial 15 bereits auf dem Füllrohr 9 anfängt zu verfestigen, kann eine Einrichtung 16 zum Aufbringen eines Fixiermittels im Bereich der Strecke X des Füllrohrs angeordnet sein. Als Fixiermittel eignet sich eine Salzlösung, insbesondere eine Kalziumchloridlösung, z.B. 10%ig.

Zusätzlich oder alternativ kann die Vorrichtung eine Gleitmitteleinrichtung 19 aufweisen zum Zuführen eines Gleitmittels zwischen Füllrohr 9 und ausgestoßenem Hüllenmaterial 15. So kann der Gleitwert zwischen dem Füllrohr und dem ausgestoßenen Hüllenmaterial minimiert werden. Als Gleitmittel kann beispielsweise Wasser zugeführt werden. Die Gleitmitteleinrichtung umfasst beispielsweise eine Zuführeinrichtung 19a für das Gleitmittel. Die Zufuhr 19a ist hier als Kanal im Füllrohr 9 ausgebildet. Zum Beispiel verläuft der Kanal ringförmig in der Füllrohrwandung. Im Bereich des Extrusionsspalts 11 ist ein weiterer Ringspalt um die Außenfläche des Füllrohrs 9 angeordnet. Dazu weist das Füllrohr 9 im Bereich hinter dem weiteren Ringspalt 19b einen kleineren Durchmesser auf als das Füllrohr in einem Bereich vor dem weiteren Ringspalt 19b. Über den Ringspalt 19b kann eine Inneneinspritzung des Gleitmittels zwischen dem ausgestoßenen Hüllenmaterial und der Oberfläche des Füllrohrs 9 erfolgen. Somit kann das ausgestoßene Hüllenmaterial gut auf dem Füllrohr gleiten.

Dadurch, dass das Füllrohr 9 über den Extrusionsspalt 11 vorsteht, kann es mit seiner Auslassöffnung 12 besonders nah an der in Transportrichtung T nachgeordneten Transporteinrichtung 4 angeordnet werden. Hier weist die Transporteinrichtung gegenüberliegende umlaufende Transportmittel 5a,5b hier z.B. Transportbänder, auf, an denen jeweils beabstandete Abteilstempel 6a, 6b angeordnet sind. Unabhängig von diesem Ausführungsbeispiel können z.B. 1 - ca. 100 Abteilstempel an einem umlaufenden Transportmittel angeordnet sein.

Die Auslassöffnung 12 des Füllrohrs 9 ragt in diesem Ausführungsbeispiel so weit in Transportrichtung T vor, dass die Auslassöffnung 12 des Füllrohrs in einem Umlenkbereich zwischen den Transportmitteln angeordnet ist, d.h. in diesem Fall in einem Bereich hinter einer Ebene E2, auf der zumindest einer der vorderen Umlenkpunkte P der Transportbänder liegt und die senkrecht zur Transportrichtung T verläuft, d.h. hier senkrecht zur Bildebene. Das Füllrohr 9 reicht allerdings nur so weit in den Umlenkbereich, dass es zu keiner Kollision mit den Abteilstempeln 6a, 6b kommt. Dabei ist der Abstand von der Auslassöffnung 12 zu der Ebene E1, die senkrecht zur Transportrichtung T liegt und auf der zumindest eine der vorderen Achsen A1a, A1b um die die Transportmittel 5a, 5b umlaufen, liegt etwa 5 - 30 mm.

Wenn die Abteilstempel 6a, 6b auf den jeweiligen Transportmitteln 5a,5b umlaufen, passieren sie jeweils den Umlenkpunkt P und sind im Umlenkbereich zwischen den Ebenen E1 und E2 noch nicht parallel zueinander ausgerichtet. Dadurch, dass die Abteilstempel nicht parallel zueinander ausgerichtet sind, streifen sie, wenn sie im Umlenkbereich aufeinander zu bewegt werden, Innenmasse aus der Hülle aus, sodass sich keine Innenmasse, sondern nur eine saubere Hülle in der Abteilstelle 8 befindet, wenn die Abteilstempel 6a,6b dann parallel zueinander ausgerichtet sind und das Hüllenmaterial 15 verpressen. Die Abteilstelle 8 kann so sauber verpresst und (homogen) verbunden werden. Bei dem aushärtbaren Hüllenmaterial ist dabei in der Abteilstelle das Hüllenmaterial noch nicht vollständig ausgehärtet, d.h. noch nicht vollständig vernetzt, sodass sich das aushärtbare Hüllenmaterial auf der Ober- und Unterseite der Hülle in der Abteilstelle stoffschlüssig verbinden kann. Beim Verpressen weisen die Abteilstempel 6a,6b beispielsweise einen Abstand s in einem Bereich von 0,1 - 0,5 mm auf. Dieser Abstand kann sich beispielsweise in Transportrichtung T noch verändern, indem z.B. der Abstand der Transportmittel an einem Ende, das dem Füllrohr zugewandt ist, größer ist als an einem entgegengesetzten hinteren Ende oder aber je nach Anwendungsfall gleich oder kleiner. So kann beispielsweise im vorderen und mittleren Bereich der Abstand in einem Bereich von 0,1 - 0,5 mm liegen und im hinteren Bereich bei einem Abstand von 0,1 - 1 mm. Der Abstand zwischen den Abteilstempeln kann auf beiden Seiten der Transportmittel unabhängig voneinander eingestellt werden, insbesondere durch Einstellen des Abstands der Transportmittel 5a,5b zueinander.

Während des Transports der verpressten Sachets 2 in Transportrichtung T werden die Abteilstellen 8 also weiter durch die Abteilstempel 6a,6b verpresst, sodass die Abteilstellen 8 während des Transports weiter aushärten und die Transporteinrichtung in einem stabilen Zustand verlassen können.

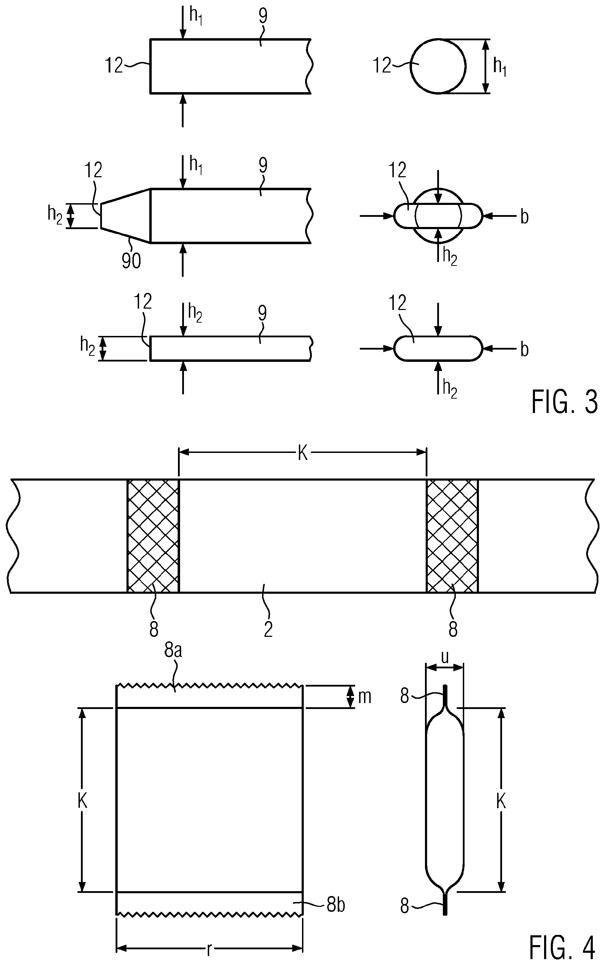

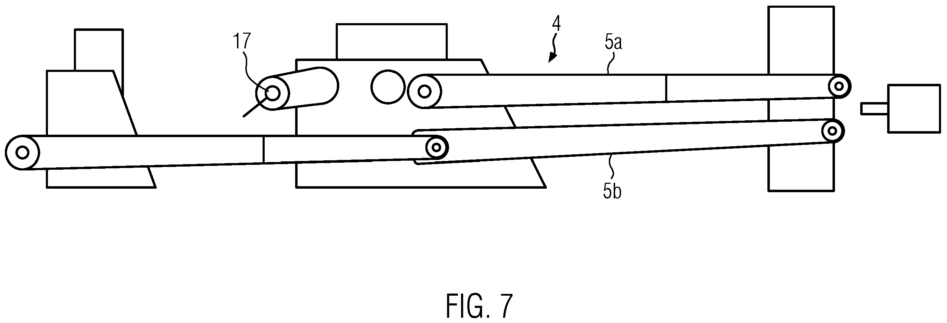

Am Ende der Transporteinrichtung, wie sie in Figur 1 gezeigt ist, verlassen die, wie in Figur 4 dargestellten Sachets 2 die Vorrichtung entweder als Sachetkette bei der die einzelnen Sachets noch über die Abteilstelle 8 verbunden sind oder einzeln. Die Sachets 2 können über eine Trenneinrichtung 17 (Fig. 7) bereits in der Transporteinrichtung 4 oder anschließend in Einzelsachets getrennt werden, und zwar an der Abteilstelle 8. Aus diesem Grund ist es wichtig, dass die Sachets flächig und faltenfrei an der Abteilstelle 8 verpresst werden, derart, dass keine Flüssigkeit, bzw. kein Lebensmittel aus dem Sachet 2 über Falten oder Kanäle austreten kann. Es ist auch möglich, dass die Trenneinrichtung 17 bereits in den Stempel 6a, 6b integriert ist. Die ebene Pressfläche wird dann durch die Trenneinrichtung, bzw. das Messer in zwei ebene Pressflächen unterteilt.

Es ist aber wie bereits beschrieben auch möglich die zusammenhängenden Sachets mit einer nicht dargestellten Perforiereinrichtung im Bereich der Abteilstelle zu perforieren. Dann können die Sachets die Vorrichtung als Kette verlassen und vom Verbraucher einfach abgetrennt werden.

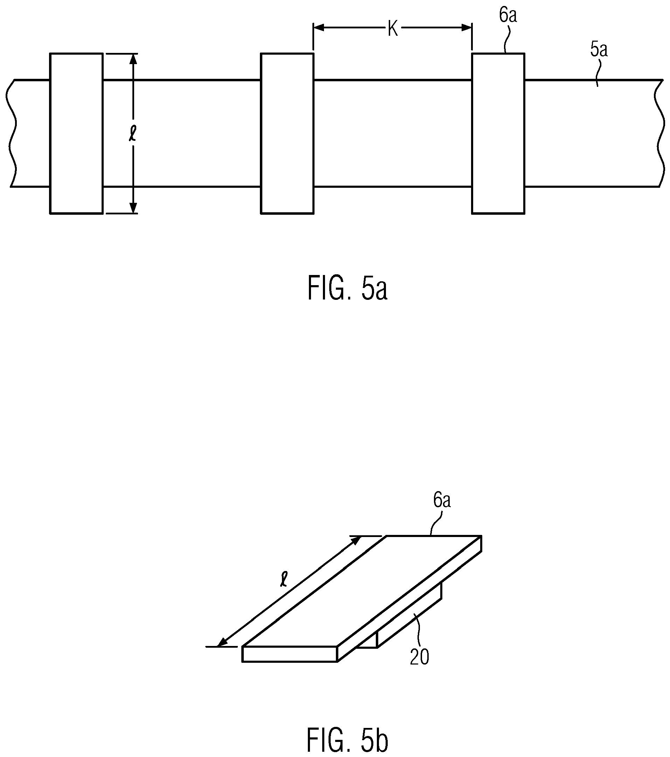

Figur 3 zeigt eine Seitenansicht und einen Querschnitt von unterschiedlichen Füllrohren gemäß der vorliegenden Erfindung. Im oberen Bereich der Fig.3 ist ein Füllrohr 9 mit einem Füllrohrdurchmesser h1 gezeigt. In der Mitte der Figur 3 ist ein Füllrohr 9 gemäß einem bevorzugten Ausführungsbeispiel der vorliegenden Erfindung gezeigt. Anders als bei der obigen Abbildung weist die Auslassöffnung 12 nicht einen runden Querschnitt auf, sondern einen Querschnitt, der eine Höhe h2 aufweist, die kleiner ist als die Breite b der Auslassöffnung 12. Somit hat die Auslassöffnung 12 einen insbesondere ovalen Querschnitt oder einen rechteckigen Querschnitt mit abgerundeten Ecken. Dabei erstreckt sich die Breite b der Auslassöffnung 12 vorzugsweise in einer Richtung parallel zu den Transportmitteln, das heißt hier den Transportbändern 5a und 5b, das heißt auch entlang der Länge I der Abteilstempel 6a, 6b (siehe Figuren 5a, 5b). Dies bringt den Vorteil mit sich, dass das Lebensmittel bereits flach extrudiert werden kann und somit das Lebensmittel einfacher durch die Abteilstempel 6a, 6b verdrängt und die Hülle dann besser und faltenfreier verpresst werden kann. Falten sind zu vermeiden, da Falten beim Verfestigungsvorgang zu schwächeren Verbindungen führen können und auch zu Undichtigkeiten nach dem Trennvorgang der Sachets. Um eine entsprechende Auslassöffnung 12 zu realisieren, kann beispielsweise ein Rohrabschnitt 90 an ein hohlzylindrisches Füllrohr 9 angeformt werden, dessen Breite der Auslassöffnung 12 größer ist als der Durchmesser des Füllrohrs und die Höhe kleiner als der Durchmesser h1 des Füllrohrs. So können herkömmliche Extrusionsköpfe mit hohlzylindrischen Rohren verwendet werden.

Es ist auch möglich wie in der Fig. 3 unten dargestellt, dass das gesamte Füllrohr bereits einen entsprechenden ovalen oder viereckigen (mit abgerundeten Kanten) Querschnitt aufweist.

In Figuren 5a und 5b werden die Abteilstempel 6a,6b in größerem Detail dargestellt. Die Abteilstempel 6a, bzw. 6b weisen einen Abstand k voneinander auf, der dann wiederum im Wesentlichen dem Abstand k zwischen den Abteilstellen 8 im Sachet 2 entspricht (siehe Fig. 4). Die Abteilstempel 6a, 6b weisen jeweils eine ebene und vorzugsweise glatte Pressfläche auf. Die trägt auch zu einer faltenfreien Abteilstelle bei, sodass bei einem mit flüssigem oder niederviskosem Lebensmittel befüllten Sachet keine Flüssigkeit an der Abteilstelle 8 austreten kann.

Vorteilhafterweise weist die Pressfläche der Abteilstempel 6a,6b eine Länge I auf, die sich senkrecht zur Transportrichtung T der Transporteinrichtung erstreckt und die größer als die Breite des ausgestoßenen Strangs ist, d.h. größer als der Durchmesser e der Extrusionsdüse 13 (siehe z.B. Fig. 6). Somit kann sichergestellt werden, dass im wesentlichen rechteckförmige Sachets erzeugt werden und gleichzeitig sichergestellt werden, dass die Abteilstempel das Lebensmittel über die gesamte Breite r des Sachets an der Abteilstelle ausstreifen und sicher verschließen.

Das Hüllenmaterial 15 kann somit an der Abteilstelle 8 vollflächig verpresst werden. Die Abteilstempel 6a,6b können über eine Verbindungseinrichtung 20, die hier nur schematisch in Fig. 5b dargestellt ist, an dem Transportmittel 5a, 5b, z.B. dem Transportband, befestigt werden. Als Material für die Abteilstempel ist z.B. Kunststoff oder Edelstahl besonders geeignet, da die Oberfläche nicht mit dem Hüllenmaterial verklebt.

Figur 7 zeigt eine bevorzugte Ausführungsform der vorliegenden Erfindung. Das hier gezeigte Ausführungsbeispiel entspricht im Wesentlichen den vorherigen Ausführungsbeispielen, wobei allerdings das untere Transportband 5b entweder länger ist als das obere Transportband 5a oder ein weiteres unteres Transportmittel 5b in Transportrichtung an das erste untere Transportmittel 5b angrenzt, sodass die hergestellten Sachets 2, bzw. der Sachet-Produktstrang an das weitere untere Band übergeben werden kann. Bei diesem Ausführungsbeispiel ist es möglich, dass ein Trennvorgang in Einzelportionen erfolgt, während der Transport nur noch auf dem unteren Band stattfindet. Dazu kann beispielsweise eine rotierende Trenneinrichtung 17 verwendet werden. Dadurch, dass das untere Transportmittel die abgeteilten Produkte von der Herstellung bis zum Trennvorgang transportiert, ergibt sich auch kein Übergabeproblem. Der Trennvorgang erfolgt in etwa in der Mitte der Abteilstelle 8 mit geringer mechanischer Belastung. Das Transportelement, insbesondere das Abteilelement, kann beim Trennen zudem die Funktion einer Auflage für das Trennelement übernehmen.

Nachfolgend wird das erfindungsgemäße Verfahren unter Bezugnahme der Figuren 1-7 näher erläutert.

Bei dem erfindungsgemäßen Verfahren zum Herstellen von gefüllten Sachets 2 wird zunächst ein Strang 10 aus einem mit Lebensmittel 14 gefüllten aushärtbarem Hüllenmaterial über die Koextrusionseinrichtung 3 extrudiert.

Vor dem Abteilen wird das Hüllenmaterial 15 noch mit einer Fixierlösung über eine Einrichtung 16 zum Aufbringen der Fixierlösung behandelt. Die Fixierlösung kann über die Einrichtung 16 beispielsweise auf das auf das Füllrohr 9 aufgebrachte Hüllenmaterial 9, z.B. ringförmig aufgesprüht werden und in der in Figur 1 gezeigten Wanne aufgefangen werden. Als Fixierlösung dient insbesondere eine Kalziumchloridlösung. Wie zuvor beschrieben kann auch ein Gleitmittel zwischen Füllrohr und Hüllenmaterial 15 eingebracht werden.

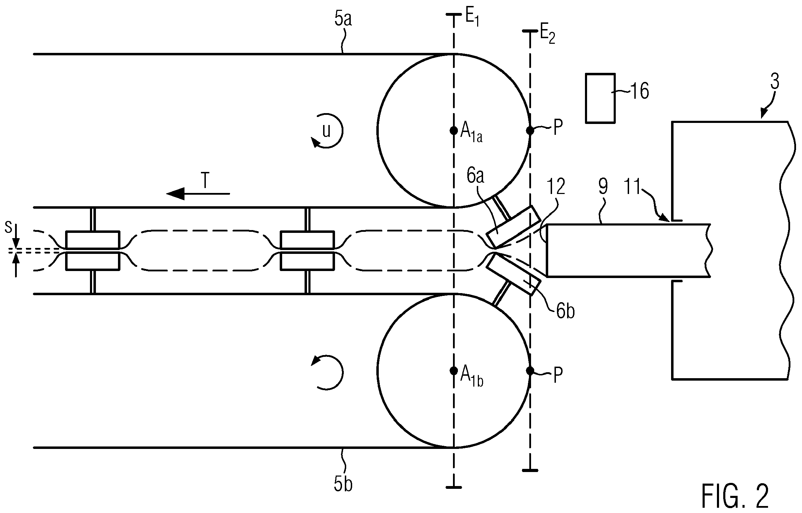

Der so erzeugte Strang 10 wird am Ende des Füllrohrs 9 ausgestoßen. Das Ende des Füllrohrs 9 ragt dabei möglichst weit in Transportrichtung T vor, d.h. vorzugsweise bis in einen Umlenkbereich der Transportmittel 5a, 5b. Wie insbesondere aus der Figur 2 hervorgeht, stehen die Abteilstempel 6a, 6b, wenn sie in den Strang 10 eingreifen unter einem Winkel α zueinander und bewegen sich dann weiter, bis sie schließlich parallel zueinander ausgerichtet sind. So streifen die Abteilelemente 6a, 6b, wenn sie sich im Umlenkbereich aufeinander zu bewegen, bis sie wieder im Wesentlichen parallel zueinander ausgerichtet sind, das Lebensmittel 14, d.h., die Innenmasse, aus, sodass sich kein Lebensmittel, sondern nur eine saubere Hülle in der Abteilstelle 8 befindet. Zu diesem Zeitpunkt ist das Hüllenmaterial 15 noch nicht vollständig ausgehärtet und vernetzt, sodass die Abteilstelle 8 sauber verpresst und verklebt werden kann und sich Ober- und Unterseite stoffschlüssig verbinden. Die so hergestellten Sachets 2 werden über die Abteilstempel 6a, 6b in Transportrichtung T weiter transportiert und während des Transports weiter verpresst. Während des Transports in der Transporteinrichtung 4 können die Abteilstellen 8 sich weiter verfestigen und stabilisieren.

Der Vorgang wiederholt sich und die nachfolgenden Abteilstempel 6a, 6b greifen in den erzeugten Strang in gleicher Weise ein wie zuvor beschrieben. Der Abstand der Abteilstempel entspricht dabei im Wesentlichen dem Abstand der Abteilstellen im Sachet 2.

Die einzelnen Sachets können dann über eine Trenneinrichtung an der Abteilstelle 8 unterteilt werden, beispielsweise auf einem verlängerten unteren Transportmittel 5b oder an einem zweiten unteren Transportmittel, das sich dem ersten unteren Transportmittel 5b anschließt oder die Sachets können als Kette mit einer bestimmten Kettenlänge produziert werden, d.h. sie werden entweder nicht getrennt oder nach einer bestimmten Anzahl an Sachets getrennt.

Die produzierten Sachets 2 weisen, wie aus Fig. 4 hervorgeht, dabei eine rechteckige flache Form auf, d.h. die Höhe u ist kleiner als die Breite r. Die Sachets 2 sind vorne und hinten durch die Abteilstelle 8a, 8b mit einer Breite m begrenzt, die vorzugsweise die halbe Abmessung der gesamten durch die Abteilstempel erzeugten Abteilstelle 8 aufweist und im Wesentlichen der halben Breite der Abteilstempel 6a,6b entspricht. Die verpressten Endbereiche, d.h. die Abteilstellen 8a, 8b, die die Sachets vorne und hinten begrenzen, sind flach und erstrecken sich über die gesamte Breite des Sachets. Sie haben auch eine rechteckige Form.

K liegt z.B. in einem Bereich von 15 - 200 mm, r liegt vorzugsweise in einem Bereich von 15 - 70 mm, u liegt vorzugsweise in einem Bereich von 4 - 40 mm. Diese Abmessungen sind nur beispielhaft und die Erfindung ist nicht darauf beschränkt.

Gemäß einer weiteren möglichen Ausführungsform umfasst das Hüllenmaterial, z.B. die Alginatpaste zerkleinerte Lebensmittel, z.B. Paprikastückchen. Die Paprikastückchen weisen z.B. ein Volumen von 1 - 4 mm³ auf. Der Extrusionsspalt für das Hüllenmaterial muss dann entsprechend angepasst werden und eine größere Spaltbreite als die größte Abmessung des Lebensmittelstückchens aufweisen, z.B. weisen die Lebensmittelstückchen eine größte Abmessung von <2mm auf und die Spaltbreite liegt dann z.B. bei 2mm. Der Anteil an zerkleinerten Lebensmittelstücken in dem noch nicht extrudierten Hüllenmaterial, z.B. der Paste liegt dabei z.B. in einem Bereich von 10 - 50 Vol.%.

Gemäß einer weiteren Ausführungsform weist die Vorrichtung eine zusätzliche Abdreheinrichtung auf über die das Füllrohr um seine Längsachse verdreht werden kann. Zur flüssigkeitsdichten Abteilung von zwei benachbarten Päckchen erfolgen beispielsweise 0,5 - 3, vorzugsweise mehr als 1,5 Umdrehungen des Füllrohrs. Es können dann z.B. abwechselnd flache Abteilstellen und abgedrehte, also abgerundete Abteilstellen erzeugt werden, sodass Säckchen-artige Produkte entstehen.

## Patentansprüche

1. Vorrichtung (1) zum Herstellen von mit flüssigem oder pastösem Füllgut, insbesondere mit flüssigen oder pastösen Lebensmitteln (14) gefüllten Sachets (2),
**gekennzeichnet durch**
- eine Koextrusionseinrichtung (3) zum Koextrudieren eines Strangs (10) aus einem mit dem Füllgut (14) gefüllten Hüllenmaterial (15) und
- gegenüberliegende umlaufende Abteilstempel (6a, 6b), zwischen denen der Strang (10) transportiert werden kann und die das Füllgut (14), wenn sie sich auf ihrer Umlaufbahn (U) aufeinander zu bewegen, an einer Abteilstelle (8) aus dem Hüllenmaterial (15) ausstreifen und das Hüllenmaterial (15) an der Abteilstelle (8) flächig zu einem Sachet (2) verpressen können.

2. Vorrichtung (1) nach Anspruch 1, **dadurch gekennzeichnet, dass** die Vorrichtung (1)
eine Transporteinrichtung (4) mit gegenüberliegenden, umlaufenden Transportmitteln (5a, 5b), insbesondere Transportbänder oder -ketten aufweist, an denen jeweils die beabstandeten Abteilstempel (6a, 6b) angeordnet sind,
insbesondere derart, dass beim Transport der Sachets (2) in Transportrichtung (T) die Abteilstempel (6a, 6b) das Hüllenmaterial an den Abteilstellen (8) weiter verpressen können.

3. Vorrichtung (1) nach Anspruch 1 oder 2, **dadurch gekennzeichnet, dass** die Abteilstempel (6a, 6b) jeweils eine ebene Pressfläche (7) aufweisen, um das Hüllenmaterial (15) an der Abteilstelle (8) vollflächig, glatt und faltenfrei zu verpressen.

4. Vorrichtung (1) nach mindestens einem der Ansprüche 1-3, **dadurch gekennzeichnet, dass** die Pressfläche (7) der Abteilstempel (6a, 6b) eine Länge (I) aufweist, die sich senkrecht zur Transportrichtung (T) der Transporteinrichtung (4) erstreckt und die größer oder gleich ist wie die Breite (b) des ausgestoßenen Strangs (10).

5. Vorrichtung (1) nach mindestens einem der Ansprüche 1-4, **dadurch gekennzeichnet, dass** die Koextrusionseinrichtung (3) ein Füllrohr (9) zum Ausstoßen des Füllguts (14), sowie eine dem Füllrohr (9) zugeordnete Extrusionsdüse (13) mit einem ringförmigen Extrusionsspalt (11) zum Ausstoßen des Hüllenmaterials (15) umfasst, wobei vorzugsweise
das Füllrohr (9) über eine Strecke X so über den Extrusionsspalt (11) vorsteht, dass das Hüllenmaterial (15) durch den Extrusionsspalt (11) auf das Füllrohr (9) extrudiert wird und sich entlang dem Füllrohr (9) verfestigen kann, insbesondere
die Vorrichtung eine Gleitmitteleinrichtung (19) zum Zuführen eines Gleitmittels zwischen Füllrohr (9) und ausgestoßenem Hüllenmaterial (15) aufweist.

6. Vorrichtung (1) nach mindestens Anspruch 5, **dadurch gekennzeichnet, dass** die Breite (b) der Auslassöffnung (12) des Füllrohrs (9) größer ist als ihre Höhe (h2), wobei die Auslassöffnung (12) insbesondere einen ovalen Querschnitt oder einen rechteckigen Querschnitt mit abgerundeten Ecken aufweist.

7. Vorrichtung (1) nach mindestens Anspruch 5 oder 6, **dadurch gekennzeichnet, dass** an dem der Transporteinrichtung (4) zugewandten Ende (E) des Füllrohrs (9) ein Rohrabschnitt (90) angeformt ist, dessen Breite der Auslassöffnung (12) (b) größer als der Durchmesser (h1) des Füllrohrs und die Höhe (h) kleiner ist als der Durchmesser (d) des Füllrohrs (9) ist, wobei vorzugsweise die Querschnittsfläche des Füllrohrs (9) und des angeformten Rohrabschnitts (90) im Wesentlichen gleich ist.

8. Vorrichtung (1) nach mindestens einem der Ansprüche 2-7, **dadurch gekennzeichnet, dass** die Transportmittel übereinander angeordnet sind und das untere umlaufende Transportmittel (5b) länger ist als das darüber liegende (5a) oder sich ein weiteres Transportmittel an das untere Transportmittel anschließt.

9. Vorrichtung (1) nach mindestens einem der Ansprüche 2-8, **dadurch gekennzeichnet, dass** die Vorrichtung (1) in Transportrichtung (T) betrachtet vor den umlaufenden Transportmitteln (5a, 5b) eine Einrichtung zum Aufbringen eines Fixiermittels (16) aufweist.

10. Vorrichtung (1) nach mindestens einem der Ansprüche 1-9, **dadurch gekennzeichnet, dass** die Vorrichtung (1) eine Trenneinrichtung (17) aufweist, die aufeinanderfolgende Sachets (2) im Bereich der Abteilstelle (8) voneinander trennt, vorzugsweise die Trenneinrichtung (17) in den Abteilstempeln (6a, 6b) integriert ist oder eine Perforiereinrichtung die die Sachets (2) an der Abteilstelle perforiert.

11. Vorrichtung (1) nach mindestens Anspruch 2, **dadurch gekennzeichnet, dass** der Abstand (s) zwischen den gegenüberliegenden Abteilstempeln (6a, 6b) einstellbar ist, insbesondere der Abstand zwischen den gegenüberliegenden Transportmitteln (5a, 5b).

12. Vorrichtung (1) nach mindestens Anspruch 2, wobei sich das Füllrohr (9) und die Transporteinrichtung (4) räumlich überlagern, insbesondere die Auslassöffnung (12) des Füllrohrs in einem Umlenkbereich zwischen den Transportmitteln (5a, 5b) angeordnet ist, insbesondere in einem Bereich in Transportrichtung betrachtet hinter einer Ebene senkrecht zur Transportrichtung (T), auf der zumindest einer der vorderen Umkehrpunkte (P) der Transportmittel liegt.

13. Vorrichtung (1) nach mindestens einem der Ansprüche 1-12, **dadurch gekennzeichnet, dass** der Abstand zwischen den gegenüberliegenden umlaufenden Transportmitteln (6a, 6b) am in Transportrichtung (T) betrachtet hinteren Ende (E) kleiner, gleich oder größer ist als am Anfang, insbesondere verstellbar ist.

14. Verfahren zum Herstellen von mit flüssigem oder pastösem Füllgut, insbesondere mit flüssigen oder pastösen Lebensmitteln (14) gefüllten Sachets (2), insbesondere mit einer Vorrichtung (1) nach mindestens einem der Ansprüche 1-13 oder 18 **dadurch gekennzeichnet, dass**
ein Strang (10) aus einem mit Füllgut (14) gefüllten aushärtbaren Hüllenmaterial (15) über eine Koextrusionseinrichtung (3) extrudiert wird und der Strang (10) zwischen umlaufende Abteilstempel (6a, 6b) geführt wird, wobei
die umlaufenden Abteilstempel (6a, 6b) sich aufeinander zu bewegen, in den Strang (10) eingreifen und dabei das Füllgut (14) an einer Abteilstelle (8) aus dem Hüllenmaterial (15) ausstreifen und das noch nicht vollständig ausgehärtete Hüllenmaterial (15) an der Abteilstelle (8) flächig zu einem Sachet (2) verpressen.

15. Verfahren nach Anspruch 14, **dadurch gekennzeichnet, dass** eine Transporteinrichtung (4) mit gegenüberliegenden, umlaufenden Transportmitteln (5a, 5b), insbesondere Transportbänder oder -ketten, an denen jeweils mehrere beabstandete Abteilstempel (6a, 6b) angeordnet sind, die abgeteilten Sachets (2) in Transportrichtung (T) transportiert, wobei die Abteilstellen (8) weiter von den Abteilstempeln (6a, 6b) gepresst werden.

16. Verfahren nach Anspruch 14 oder 15, **dadurch gekennzeichnet, dass** die Sachets (2) an ihrer Abteilstelle getrennt werden und die getrennten Sachets (2) eine rechteckige flache Form aufweisen, wobei vorzugsweise die Höhe (u) der Sachets kleiner als die Breite (r) ist und insbesondere das Verhältnis von der Höhe (u) zur Breite (r) vorzugsweise in einem Bereich von 1:1,5 - 1:20 liegt und vorzugsweise sich die Abteilstellen (8a,b), die die Sachets (2) vorne und hinten verschließen sich über die gesamte Breite (r) des Sachets (2) erstrecken.

17. Verfahren nach mindestens einem der Ansprüche 14 -16, **dadurch gekennzeichnet, dass** das Hüllenmaterial Lebensmittelstückchen aufweist.

18. Vorrichtung nach mindestens einem der Ansprüche 1-13, **dadurch gekennzeichnet, dass** der Abstand von der Auslassöffnung (12) des Füllrohrs (9) zu einer Ebene E1, die senkrecht zur Transportrichtung T liegt und auf der zumindest eine der vorderen Achsen (A1a, A1b), um die die Transportmittel 5a, 5b umlaufen, liegt, etwa 5 - 30 mm beträgt.

## Geänderte Patentansprüche

### Geänderte Patentansprüche gemäss Regel 137(2) EPÜ.

1. Vorrichtung (1) zum Herstellen von mit flüssigem oder pastösem Füllgut, insbesondere mit flüssigen oder pastösen Lebensmitteln (14) gefüllten Sachets (2), **gekennzeichnet durch**
- eine Koextrusionseinrichtung (3) zum Koextrudieren eines Strangs (10) aus einem mit dem Füllgut (14) gefüllten Hüllenmaterial (15) und
- gegenüberliegende umlaufende Abteilstempel (6a, 6b), zwischen denen der Strang (10) transportiert werden kann und die das Füllgut (14), wenn sie sich auf ihrer Umlaufbahn (U) aufeinander zu bewegen, an einer Abteilstelle (8) aus dem Hüllenmaterial (15) ausstreifen und das Hüllenmaterial (15) an der Abteilstelle (8) flächig zu einem Sachet (2) verpressen können wobei
die Abteilstempel (6a, 6b) jeweils eine ebene Pressfläche (7) aufweisen, um das Hüllenmaterial (15) an der Abteilstelle (8) vollflächig, glatt und faltenfrei zu verpressen und die Vorrichtung eine Transporteinrichtung (4) aufweist mit gegenüberliegenden, umlaufenden Transportmitteln (5a, 5b), wobei die Vorrichtung (1) in Transportrichtung (T) betrachtet vor den umlaufenden Transportmitteln (5a, 5b) eine Einrichtung zum Aufbringen eines Fixiermittels (16) aufweist.

2. Vorrichtung (1) nach Anspruch 1, **dadurch gekennzeichnet, dass** die Vorrichtung (1),
als Transporteinrichtung Transportbänder oder -ketten aufweist, an denen jeweils die beabstandeten Abteilstempel (6a, 6b) angeordnet sind,
insbesondere derart, dass beim Transport der Sachets (2) in Transportrichtung (T) die Abteilstempel (6a, 6b) das Hüllenmaterial an den Abteilstellen (8) weiter verpressen können.

3. Vorrichtung (1) nach mindestens einem der Ansprüche 1-2, **dadurch gekennzeichnet, dass** die Pressfläche (7) der Abteilstempel (6a, 6b) eine Länge (I) aufweist, die sich senkrecht zur Transportrichtung (T) der Transporteinrichtung (4) erstreckt und die größer oder gleich ist wie die Breite (b) des ausgestoßenen Strangs (10).

4. Vorrichtung (1) nach mindestens einem der Ansprüche 1-3, **dadurch gekennzeichnet, dass** die Koextrusionseinrichtung (3) ein Füllrohr (9) zum Ausstoßen des Füllguts (14), sowie eine dem Füllrohr (9) zugeordnete Extrusionsdüse (13) mit einem ringförmigen Extrusionsspalt (11) zum Ausstoßen des Hüllenmaterials (15) umfasst, wobei
das Füllrohr (9) über eine Strecke X so über den Extrusionsspalt (11) vorsteht, dass das Hüllenmaterial (15) durch den Extrusionsspalt (11) auf das Füllrohr (9) extrudiert wird und sich entlang dem Füllrohr (9) verfestigen kann und
die Vorrichtung eine Gleitmitteleinrichtung (19) zum Zuführen eines Gleitmittels zwischen Füllrohr (9) und ausgestoßenem Hüllenmaterial (15) aufweist.

5. Vorrichtung (1) nach mindestens Anspruch 4, **dadurch gekennzeichnet, dass** die Breite (b) der Auslassöffnung (12) des Füllrohrs (9) größer ist als ihre Höhe (h2), wobei die Auslassöffnung (12) insbesondere einen ovalen Querschnitt oder einen rechteckigen Querschnitt mit abgerundeten Ecken aufweist.

6. Vorrichtung (1) nach mindestens Anspruch 4 oder 5, **dadurch gekennzeichnet, dass** an dem der Transporteinrichtung (4) zugewandten Ende (E) des Füllrohrs (9) ein Rohrabschnitt (90) angeformt ist, dessen Breite der Auslassöffnung (12) (b) größer als der Durchmesser (h1) des Füllrohrs und die Höhe (h) kleiner ist als der Durchmesser (d) des Füllrohrs (9) ist, wobei vorzugsweise die Querschnittsfläche des Füllrohrs (9) und des angeformten Rohrabschnitts (90) im Wesentlichen gleich ist.

7. Vorrichtung (1) nach mindestens einem der Ansprüche 2-6, **dadurch gekennzeichnet, dass** die Transportmittel übereinander angeordnet sind und das untere umlaufende Transportmittel (5b) länger ist als das darüber liegende (5a) oder sich ein weiteres Transportmittel an das untere Transportmittel anschließt.

8. Vorrichtung (1) nach mindestens einem der Ansprüche 1-7, **dadurch gekennzeichnet, dass** die Vorrichtung (1) eine Trenneinrichtung (17) aufweist, die aufeinanderfolgende Sachets (2) im Bereich der Abteilstelle (8) voneinander trennt, vorzugsweise die Trenneinrichtung (17) in den Abteilstempeln (6a, 6b) integriert ist oder eine Perforiereinrichtung die die Sachets (2) an der Abteilstelle perforiert.

9. Vorrichtung (1) nach mindestens Anspruch 2, **dadurch gekennzeichnet, dass** der Abstand (s) zwischen den gegenüberliegenden Abteilstempeln (6a, 6b) einstellbar ist, insbesondere der Abstand zwischen den gegenüberliegenden Transportmitteln (5a, 5b).

10. Vorrichtung (1) nach mindestens Anspruch 2, wobei sich das Füllrohr (9) und die Transporteinrichtung (4) räumlich überlagern und die Auslassöffnung (12) des Füllrohrs in einem Umlenkbereich zwischen den Transportmitteln (5a, 5b) angeordnet ist.

11. Vorrichtung (1) nach mindestens Anspruch 12, wobei sich das Füllrohr (9) und die Transporteinrichtung (4) in einem Bereich in Transportrichtung betrachtet hinter einer Ebene senkrecht zur Transportrichtung (T), auf der zumindest einer der vorderen Umkehrpunkte (P) der Transportmittel liegt überlagern.

12. Vorrichtung (1) nach mindestens einem der Ansprüche 1-11, **dadurch gekennzeichnet, dass** der Abstand zwischen den gegenüberliegenden umlaufenden Transportmitteln (6a, 6b) am in Transportrichtung (T) betrachtet hinteren Ende (E) kleiner, gleich oder größer ist als am Anfang, insbesondere verstellbar ist.

13. Vorrichtung nach mindestens einem der Ansprüche 1-12, **dadurch gekennzeichnet, dass** der Abstand von der Auslassöffnung (12) des Füllrohrs (9) zu einer Ebene E1, die senkrecht zur Transportrichtung T liegt und auf der zumindest eine der vorderen Achsen (A1a, A1b), um die die Transportmittel 5a, 5b umlaufen, liegt, etwa 5 - 30 mm beträgt.

14. Verfahren zum Herstellen von mit flüssigem oder pastösem Füllgut, insbesondere mit flüssigen oder pastösen Lebensmitteln (14) gefüllten Sachets (2), insbesondere mit einer Vorrichtung (1) nach mindestens einem der Ansprüche 1-13 **dadurch gekennzeichnet, dass**
ein Strang (10) aus einem mit Füllgut (14) gefüllten aushärtbaren Hüllenmaterial (15) über eine Koextrusionseinrichtung (3) extrudiert wird und der Strang (10) zwischen umlaufende Abteilstempel (6a, 6b) geführt wird, wobei das Hüllenmaterial ein mittels Fixierlösung aushärtbares Hüllenmaterial ist,
die umlaufenden Abteilstempel (6a, 6b) sich aufeinander zu bewegen, in den Strang (10) eingreifen und dabei das Füllgut (14) an einer Abteilstelle (8) aus dem Hüllenmaterial (15) ausstreifen und das noch nicht vollständig ausgehärtete Hüllenmaterial (15) an der Abteilstelle (8) flächig zu einem Sachet (2) verpressen,
wobei die Abteilstempel (6a, 6b) jeweils eine ebene Pressfläche (7) aufweisen, um das Hüllenmaterial (15) an der Abteilstelle (8) vollflächig, glatt und faltenfrei zu verpressen.

15. Verfahren nach Anspruch 14, **dadurch gekennzeichnet, dass** eine Transporteinrichtung (4) mit gegenüberliegenden, umlaufenden Transportmitteln (5a, 5b), insbesondere Transportbänder oder -ketten, an denen jeweils mehrere beabstandete Abteilstempel (6a, 6b) angeordnet sind, die abgeteilten Sachets (2) in Transportrichtung (T) transportiert, wobei die Abteilstellen (8) weiter von den Abteilstempeln (6a, 6b) gepresst werden.

16. Verfahren nach Anspruch 14 oder 15, **dadurch gekennzeichnet, dass** die Sachets (2) an ihrer Abteilstelle getrennt werden und die getrennten Sachets (2) eine rechteckige flache Form aufweisen, wobei vorzugsweise die Höhe (u) der Sachets kleiner als die Breite (r) ist und insbesondere das Verhältnis von der Höhe (u) zur Breite (r) vorzugsweise in einem Bereich von 1:1,5 - 1:20 liegt und vorzugsweise sich die Abteilstellen (8a,b), die die Sachets (2) vorne und hinten verschließen sich über die gesamte Breite (r) des Sachets (2) erstrecken.

17. Verfahren nach mindestens einem der Ansprüche 14 -16, **dadurch gekennzeichnet, dass** das Hüllenmaterial Lebensmittelstückchen aufweist.
